# FASCICULE DE BREVET EUROPEEN

(11) **EP 3 695 466 B1**
(45) Date de publication et mention de la délivrance du brevet: **02.03.2022**
(21) Numéro de dépôt: 18793256.1
(22) Date de dépôt: 05.10.2018
(51) Int. Cl.: H01R 13/62, H01R 13/625, H01R 13/635

(54) **DISPOSITIF DE CONNEXION COMPRENANT UN CIRCUIT MAGNETIQUE MULTIPOLAIRE**
VERBINDUNGSVORRICHTUNG MIT EINEM MEHRPOLIGEN MAGNETISCHEN KREIS
CONNECTION DEVICE COMPRISING A MULTIPOLAR MAGNETIC CIRCUIT

(30) Priorité: 10.10.2017 FR 1759460
(43) Date de publication de la demande: 19.08.2020
(73) Titulaire: A Raymond Et Cie, 38000 Grenoble (FR); Centre National de la Recherche Scientifique, 75794 Paris Cedex 16 (FR)
(72) Inventeur: YONNET, Jean-Paul, 38240 Meylan (FR); SANCHEZ, Anthony, 38000 Grenoble (FR)
(74) Mandataire: IP Trust
(86) Numéro de dépôt international: PCT/FR2018/052465
(87) Numéro de publication internationale: WO 2019/073150

(56) Documents cités:
- EP-A1- 2 760 089
- CN-U- 204 558 790
- FR-A1- 2 625 847
- FR-A1- 3 010 243
- FR-A1- 3 022 084

## Description

### DOMAINE DE L'INVENTION

Le domaine de l'invention est celui des dispositifs de connexion comprenant un élément femelle et un élément mâle adaptés pour s'insérer axialement l'un dans l'autre, des circuits magnétiques étant prévus sur l'élément femelle et l'élément mâle pour créer un champ magnétique qui tend à rapprocher les deux éléments lorsqu'ils sont insérés l'un dans l'autre.

L'invention concerne plus particulièrement les connecteurs électriques dans lesquels l'élément femelle peut être une prise électrique femelle fixée à un véhicule tracteur et l'élément mâle peut être une prise électrique mâle d'un attelage de remorque.

### ARRIERE PLAN TECHNOLOGIQUE DE L'INVENTION

On sait qu'un attelage de remorque est accroché à l'arrière d'un véhicule tracteur via un crochet d'attelage fixé à la caisse du véhicule.

Lorsque l'attelage de la remorque est crocheté au véhicule, les signaux lumineux tels que les clignotants, les feux de freinage ou de recul de l'arrière du véhicule sont masqués par la remorque et un transfert de ces signaux lumineux du véhicule tracteur à la remorque doit être réalisé à travers un connecteur électrique comprenant une prise électrique femelle généralement fixée sur le véhicule tracteur et une prise électrique mâle reliée par un câble électrique aux feux de la remorque.

Le document FR3022084 divulgue un tel exemple de connecteur électrique avec une prise électrique femelle et une prise électrique mâle.

Des aimants sont agencés sur les deux prises électriques pour produire un effet d'attraction mutuelle qui conduit à les plaquer automatiquement l'une contre l'autre, et contribue à faciliter le guidage de la prise mâle, en aveugle, vers la prise femelle.

Comme il est précisé dans le document précité, l'effort d'attraction axial exercé par les aimants entre eux est relativement faible. Il n'est pas toujours suffisant pour maintenir les deux prises l'une à l'autre de manière sécurisée. Ceci est notamment dû à la taille réduite des aimants qu'il est nécessaire de dimensionner ainsi pour maintenir un dispositif compact. Ceci est également imposé par le besoin de pouvoir déconnecter les deux prises l'une de l'autre sans devoir exercer un effort d'extraction axial, pour contrer l'effort d'attraction magnétique, qui soit excessif et qui rendrait le dispositif de connexion peu ergonomique.

Le document FR2625847 propose un connecteur électrique avec une prise électrique femelle et une prise électrique mâle dont la connexion est assistée magnétiquement, qui présente un problème similaire.

C'est pourquoi on cherche à améliorer la connexion des prises électriques femelle et mâle et à améliorer la fiabilité du verrouillage des prises en position de connexion électrique.

### BREVE DESCRIPTION DE L'INVENTION

En vue de la réalisation de ce but, l'objet de l'invention propose un dispositif de connexion selon la revendication 1.

La faculté de canaliser les flux générés par les aimants et de refermer ces flux sur les culasses permet de développer une force magnétique d'attraction particulièrement intense quand les aimants sont à faible distance entre les éléments mâle et femelle.

L'intensité de cette force est employée pour venir plaquer fermement l'un contre l'autre l'élément mâle à l'élément femelle en complément de la retenue mécanique formée par le mécanisme de verrouillage à baïonnette. On forme de la sorte un dispositif de connexion particulièrement fiable.

Selon d'autres caractéristiques avantageuses et non limitatives de l'invention, prises seules ou selon toute combinaison techniquement réalisable :
- le décalage angulaire de verrouillage est compris entre 4° et 6° ;
- l'application d'un couple de déverrouillage sur l'un ou l'autre des éléments pour placer les deux éléments en position de déverrouillage impose un décalage angulaire de déverrouillage entre le circuit magnétique primaire de l'élément femelle et le circuit magnétique primaire de l'élément mâle pour lequel la force magnétique d'attraction axiale présente une intensité moindre que celle générée lorsque les deux éléments sont disposés en position de verrouillage ;
- le décalage angulaire de déverrouillage est compris entre 10° et 45° ;
- le circuit magnétique multipolaire présente quatre pôles ;
- le circuit magnétique multipolaire présente deux pôles ;
- l'élément femelle comporte une cage annulaire avec un orifice dans laquelle s'insère un plot de connexion de l'élément mâle ;
- l'élément femelle et l'élément male sont pourvus d'au moins une came de guidage tendant à écarter l'élément mâle de l'élément femelle en cas de déverrouillage ;
- la came de guidage est formée d'une dent à pans inclinés disposée sur l'élément femelle et d'une rainure à bords inclinés disposée sur l'élément mâle, la dent étant configurée pour s'engager dans la rainure lorsque l'élément femelle et l'élément mâle sont insérés l'un dans l'autre ;
- la dent est configurée pour prendre appui sur les bords inclinés de la rainure de sorte à éloigner l'élément mâle de l'élément femelle en cas de déverrouillage ;
- le dispositif comprend un système mécanique détrompeur pour positionner angulairement l'élément mâle dans l'élément femelle ;
- l'élément femelle et l'élément mâle sont des prises électriques ;
- les prises électriques sont des prises électriques pour un attelage, et notamment un attelage de remorque.

### BREVE DESCRIPTION DES DESSINS

D'autres caractéristiques et avantages de l'invention ressortiront de la description détaillée de l'invention qui va suivre en référence aux figures annexées sur lesquels :
- les figures 1 et 7 sont des illustrations schématiques d'un connecteur électrique pour attelage comprenant une prise électrique mâle avant son insertion dans la prise électrique femelle, selon deux variantes conformes à l'invention ;
- les figures la et 2 sont une illustration schématique de la prise électrique femelle selon un mode de réalisation de l'invention ;
- les figures 1b et 3 sont une illustration schématique de la prise électrique mâle selon un mode de réalisation de l'invention ;
- les figures 4a et 4b illustrent le décalage angulaire des circuits magnétiques primaires agencés sur la prise électrique femelle et la prise électrique mâle lorsque ceux-ci sont dans une position de verrouillage et de déverrouillage ;
- les figures 5a et 5b illustrent deux exemples de circuits magnétiques multipolaires pouvant être employés dans un dispositif de connexion conforme à l'invention ;
- la figure 6 représente l'évolution de la force et du couple magnétique généré par les circuits magnétiques multipolaires des figures 5a et 5b en fonction du décalage angulaire.

### DESCRIPTION DETAILLEE DE L'INVENTION

Par souci de simplification de la description à venir, les mêmes références sont utilisées pour des éléments identiques ou assurant la même fonction dans les différents modes de mise en œuvre exposés du produit.

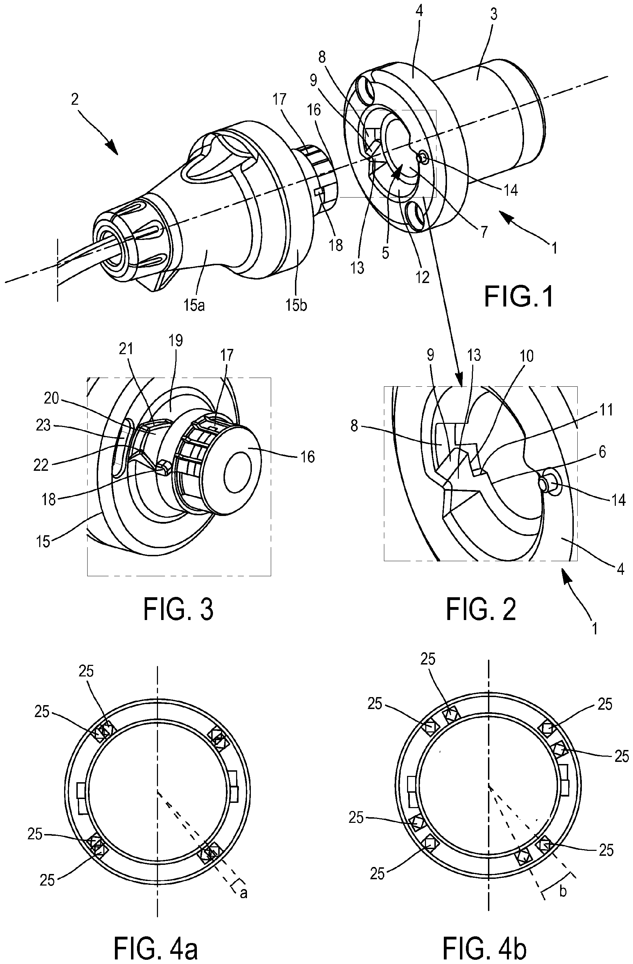

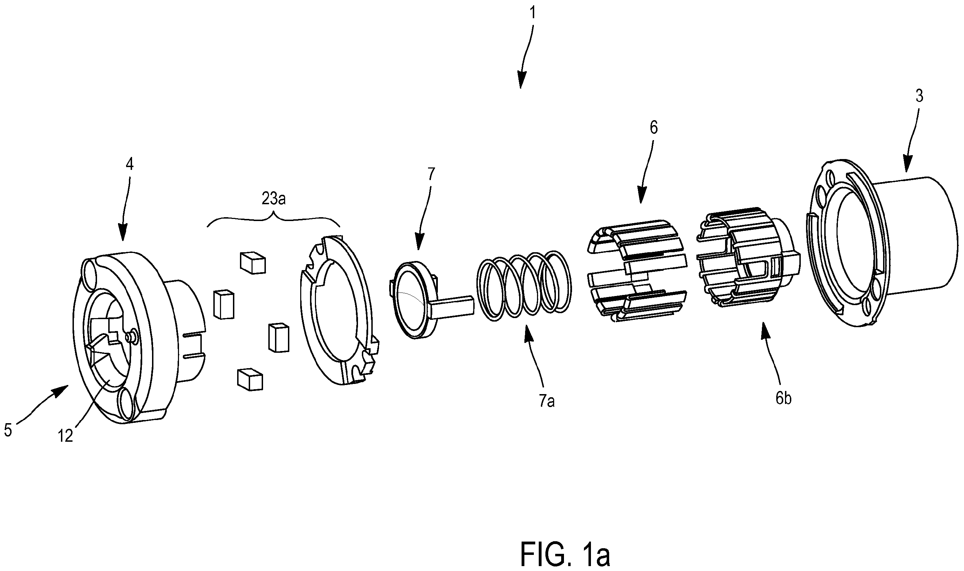

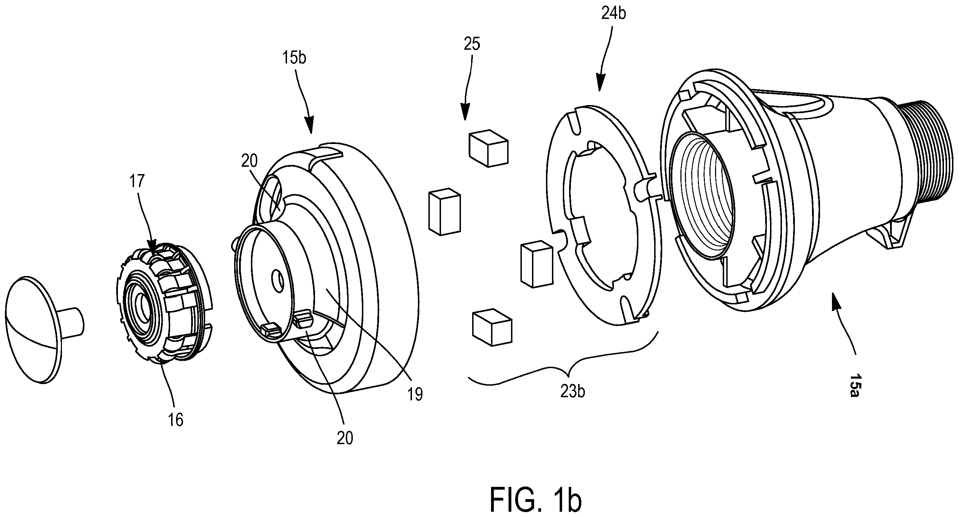

Sur les figures 1, 1a, 1b on a illustré de façon schématique un exemple de dispositif de connexion selon l'invention qui comprend ici un élément femelle 1 et un élément mâle 2 adaptés pour s'insérer axialement selon l'axe A l'un dans l'autre et se verrouiller en position de connexion et inversement.

L'élément femelle 1 peut être ici une prise électrique femelle destinée par exemple à être fixée à une caisse d'un véhicule tracteur à moteur (non représentée) et l'élément mâle 2 peut être ici une prise électrique mâle qui est reliée par un câble électrique aux feux d'une remorque (non représentée).

Comme visible sur les figures 1 et 1a, l'élément femelle 1 comprend un capot cylindrique 3 avec un corps 4 en forme de collerette qui présente un orifice 5 d'une cage annulaire, présentant un bord périphérique 12 chanfreiné.

Dans le cas particulier illustré sur les figures 1 et la où le dispositif de connexion est une prise électrique, des contacts électriques 6 à lamelle peuvent être agencés sur la cage annulaire par l'intermédiaire d'un barillet 6b. Chaque contact électrique 6 à lamelle peut être câblé par cosse à sertir standard à un câble électrique.

Un obturateur 7 monté mobile en translation axiale, par exemple par l'intermédiaire d'un ressort de rappel 7a, dans la cage est prévu ici pour fermer l'orifice 5 en l'absence de l'élément mâle 2, ce qui empêche des poussières et autres saletés d'entrer dans la cage annulaire de l'élément femelle 1.

Comme particulièrement visible sur la figure 2, la paroi annulaire intérieure de la cage annulaire présente ici deux évidements 8 diamétralement opposés. Chaque évidement 8 forme une fente axiale ouverte sur le bord de l'orifice 5. La fente a un bord droit sur un côté et un bord incliné sur l'autre côté qui constitue une rampe 9 de guidage. La pente de la rampe de guidage 9 est suffisamment grande pour permettre une connexion nette et franche des éléments mâle 2 et femelle 1, et suffisamment petite pour que les efforts axiaux lors de la connexion des éléments mâle 2 et femelle 1 soient limités. Ainsi, une gamme angulaire comprise entre 25 et 35° peut être un bon compromis.

La rampe 9 de guidage se termine par un épaulement intérieur 10 limité par une butée 11. La longueur de l'épaulement intérieur 10, c'est-à-dire la distance séparant l'extrémité de la rampe 9 de la butée 11, est choisie de sorte à être suffisamment grande pour sécuriser correctement la connexion entre les éléments mâle 2 et femelle 1, et à être suffisamment petite pour que les deux éléments femelle 1 et mâle 2 puissent être désolidarisés sans trop d'efforts. Une longueur comprise entre 3 et 4 mm peut être un bon compromis.

En référence aux figures 1 et 1b, l'élément mâle 2 comprend ici un corps cylindrique 15a avec une collerette frontale 15b à partir de laquelle s'étend axialement un plot de connexion 16 cylindrique. Dans le cas particulier où le dispositif de connexion est une prise électrique, des contacts électriques 17 à lamelle peuvent être disposés sur la surface extérieure annulaire du plot de connexion 16. Chaque contact électrique 17 à lamelle peut être câblé par cosse à sertir standard à un câble électrique.

L'extrémité frontale du plot de connexion 16 a un bord périphérique chanfreiné pour faciliter son insertion dans l'orifice 5 de l'élément femelle 1. La base 19 du plot de connexion 16 de l'élément mâle 2, côté corps 15b, est ici tronconique avec une surface extérieure complémentaire à la surface intérieure du bord périphérique 12 chanfreiné de l'orifice 5 de l'élément femelle 1.

Sur la figure 1 et la figure 3, on a illustré deux ergots 18 en saillie radiale sur la surface extérieure annulaire du plot de connexion 16. Ces ergots 18 diamétralement opposés sur le plot de connexion 16 sont destinés à pénétrer dans les fentes axiales formant les évidements 8 et à se loger dans les espaces définis par les épaulements intérieurs 10. On constitue de la sorte un mécanisme de verrouillage à baïonnette de l'élément mâle 2 et de l'élément femelle 1. Grâce à ce mécanisme, l'élément mâle 2 ne peut être extrait de l'élément femelle 1 par un simple effort d'extraction axial, sans toutefois que ces éléments ne soient maintenus plaqués l'un contre l'autre.

Lors de l'insertion du plot de connexion 16 dans l'orifice 5, les deux ergots 18 s'engagent donc dans les fentes formant les deux évidements 8 par translation axiale, et glissent sur les rampes 9. A la fin de l'insertion de l'élément mâle 2 dans l'élément femelle 1, les deux ergots 18 viennent en contact contre les butées 11 des évidements 8 en étant guidés par les épaulements 10. Cette configuration définit la position de verrouillage de l'élément mâle 2 et de l'élément femelle 1.

Pour déconnecter les deux éléments l'un de l'autre, on applique un couple de rotation à l'un ou l'autre des deux éléments 1, 2 de manière à venir placer en butée les ergots 18 sur les bords droits des fentes formant les ouvertures 8, ces bords droits faisant face aux butées 11 des épaulements 10. Cette configuration définit la position de déverrouillage de l'élément mâle 2 et de l'élément femelle 1. Dans cette position, on libère les ergots 18 des épaulements intérieurs 10, que l'on peut donc extraire des ouvertures 8 par application d'un effort axial d'extraction sur l'un des éléments 1, 2 pour les séparer l'un de l'autre.

Le dispositif de connexion peut avantageusement prévoir un détrompeur mécanique pour guider l'insertion de l'élément mâle 2 dans l'élément femelle 1 selon une position angulaire relative déterminée de ces éléments. A cet effet, sur la partie frontale de la collerette du corps 4 de l'élément femelle 1, on peut prévoir un pion 14 en saillie axiale, et similairement prévoir sur la partie frontale de la collerette du corps 15b de l'élément mâle 2, une lumière 23 dans laquelle le pion 14 peut s'engager.

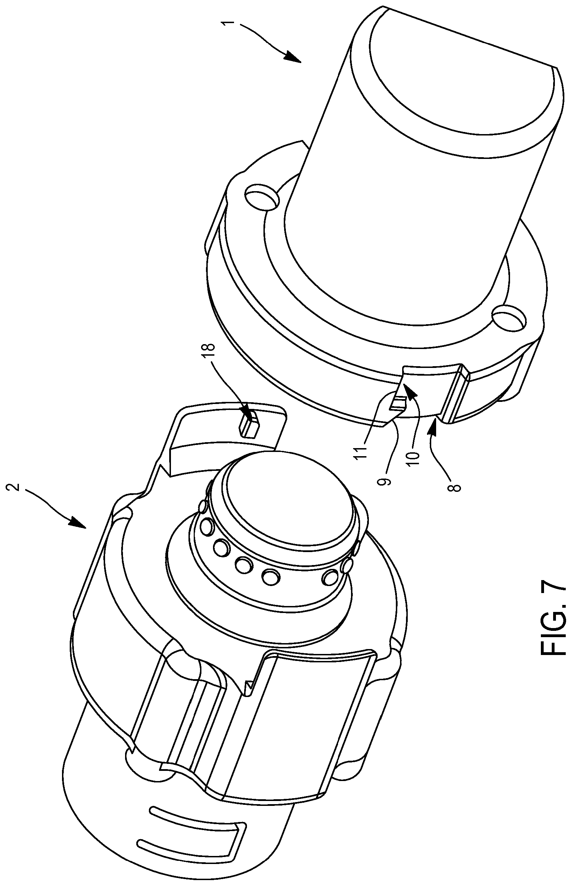

La figure 7 représente un dispositif de connexion selon une variante de mise en œuvre de l'invention. Dans le cas représenté sur cette figure, les évidements 8 sont formés sur le contour extérieur de la collerette 4 du connecteur femelle 1. On retrouve sur chaque évidement 8 la rampe 9 l'épaulement 10, la buté 11 de l'épaulement 10. On retrouve également le bord droit de l'ouverture 8 opposé à la butée 11 de l'épaulement 10. Les ergots 18 sont portés par deux éléments axialement saillants de l'élément mâle 2. Comme dans le mode de mise en œuvre principal des figures 1, 1a, 1b, les ergots 18 et les ouvertures 8 forment un mécanisme de verrouillage à baïonnette.

Selon l'invention et indépendamment de la variante choisie de mise en œuvre, l'élément mâle 1 et l'élément femelle 2 portent chacun un circuit primaire magnétique 23a, 23b respectivement disposés derrière la partie frontale de la collerette 15b du corps de l'élément mâle 2 et derrière la partie frontale de la collerette 4 de l'élément femelle 1, comme cela est représenté sur les figures la et 1b.

Chaque circuit magnétique primaire 23a, 23b comprend une culasse 24a, 24b formé d'un matériau ferromagnétique, tel que du fer doux. Les culasses 24a, 24b sont respectivement agencés dans l'élément femelle 1 et l'élément mâle 2 selon un plan transversal à l'axe d'insertion. Chaque culasse peut prendre la forme d'un anneau, comme cela est représenté sur les figures la et 1b, ou prendre une forme fermée quelconque ou être constituée d'une pluralité de segments non jointifs.

Chaque circuit magnétique primaire comprend également une pluralité d'aimants 25, aptes à générer un flux magnétique, et fixés à la culasse 24a, 24b Les aimants 25 sont disposés du côté de la partie frontale de la collerette 15b de l'élément mâle 2 et, respectivement du côté de la partie frontale de la collerette 4 de l'élément femelle 1, vis-à-vis de la culasse 24a, 24b. En conséquence, lorsque l'élément mâle 2 et l'élément femelle 1 sont à proximité en vis-à-vis l'un de l'autre, les aimants 25 sont disposés entre les deux culasses 23a, 23b.

Comme cela sera exposé plus en détail dans la suite de cet exposé, lorsque les éléments mâle et femelle 1, 2 sont à proximité en vis-à-vis l'un de l'autre, le circuit magnétique primaire 23a de l'élément femelle 1 et le circuit magnétique primaire 23b de l'élément mâle 2 présentent un décalage angulaire dans un plan transversal à l'axe d'insertion. Ce décalage sera désigné plus simplement « décalage angulaire » dans la suite de cet exposé. Le décalage angulaire résulte de l'orientation angulaire dans laquelle chacun des circuits magnétiques primaires 23a, 23b a été rendu solidaire de l'élément mâle 2 et de l'élément femelle 1. Il résulte également de l'orientation angulaire relative de l'élément mâle 2 et de l'élément femelle 1, lorsque ceux-ci sont sur le point d'être connectés entre eux.

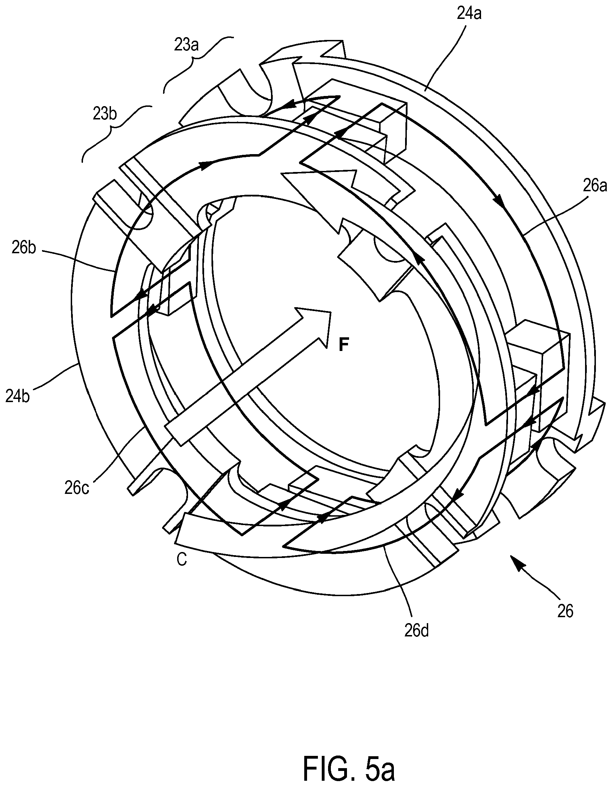

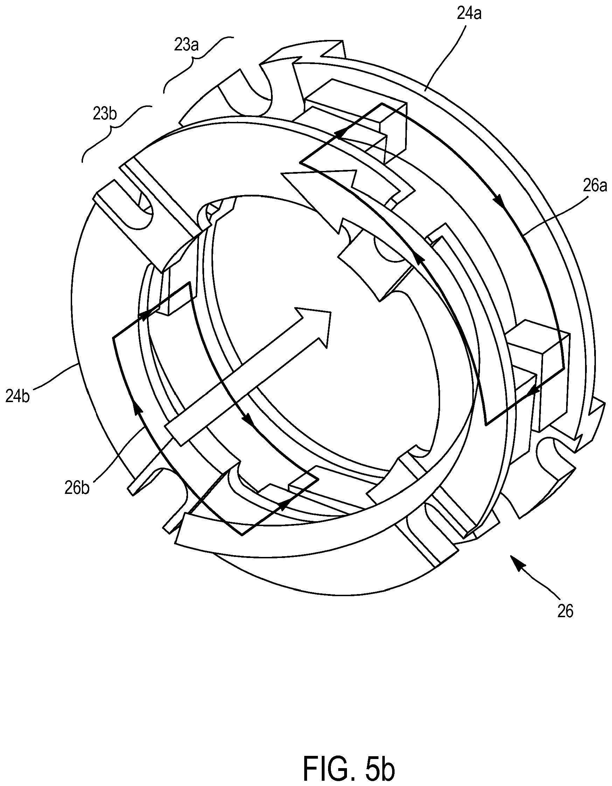

L'orientation des aimants 25 est choisie pour que, dans une gamme au moins de décalages angulaires, une force magnétique d'attraction conduisant à rapprocher les deux éléments 1, 2 l'un de l'autre se développe. Plusieurs exemples préférés seront détaillés dans la suite de cet exposé, en relation avec la description des figures 5a et 5b.

Dans le mode de mise en œuvre représenté sur les figures la et 1b, quatre aimants permanents sont respectivement disposés et régulièrement répartis à la périphérie de chacune des culasses annulaires 24a, 24b, à 90° les uns des autres. On pourrait tout à fait envisager une autre répartition et par exemple séparer deux aimants 25 adjacents d'un angle compris entre 60 et 120 degrés. Cette répartition n'est pas nécessairement identique sur les deux circuits magnétiques primaires 23a, 23b, bien que par simplicité de mise en œuvre des phénomènes magnétiques qui s'opèrent, cette configuration soit préférée. Elle permet notamment d'établir une position angulaire de référence pour lesquels les aimants 25 de chaque circuit magnétique primaire 23a, 23b sont en vis-à-vis les uns des autres.

Les aimants permanents peuvent prendre la forme d'un cube de quelques millimètres de côté et être constitués de NdFeB. Ils peuvent présenter une induction rémanente de l'ordre de 1.2 T ou plus.

On a représenté sur la figure 5a les deux circuits magnétiques primaires 23a, 23b, isolés du reste des pièces composant les éléments mâle 2 et femelle 1 pour plus de visibilité, lorsque ces éléments sont rapprochés en vis-à-vis l'un de l'autre, en position d'insertion. Dans la configuration d'aimants 25 représentée sur la figure 5a, toute paire adjacente d'aimants d'un des circuits primaires 23a, 23b est constituée d'aimants orientés pour présenter des polarités opposées, selon une configuration du type « NSNS ». Dans cette configuration, il existe deux décalages angulaires pour lesquels les aimants de chaque circuit primaire 23a, 23b sont en vis-à-vis les uns des autres, opposant des faces de polarités opposées, qui s'attirent donc mutuellement.

Dans la disposition représentée sur la figure 5a, les circuits magnétiques primaires 23a, 23b tendent à se coupler magnétiquement l'un à l'autre pour former un circuit magnétique multipolaire 26. Ce circuit produit une force d'attraction axiale qui tend à rapprocher ou écarter les deux éléments 1, 2 l'un de l'autre et un couple magnétique qui tend à faire tourner l'un des éléments 1, 2 relativement à l'autre. Cette force et ce couple sont représentés par les flèches F et C sur la figure 5a. Les flux magnétiques générés par les aimants permanents 25 sont canalisés, circulent et se referment sur ces culasses 24a, 24b.

On forme ainsi quatre boucles de flux magnétique circulant dans chacune des paires adjacentes d'aimants de chaque circuit primaire 23a, 23b et dans chaque portion de culasse 24a, 24b séparant cette paire d'aimants 25. Le circuit magnétique polaire 26 présente alors quatre pôles 26a, 26b, 26c, 26d comme cela est schématiquement représenté sur la figure 5.

La faculté de canaliser les flux générés par les aimants permanents 25 et de les refermer pour constituer des pôles magnétiques permet de développer un effort d'attraction particulièrement intense entre les éléments mâle et femelle 1, 2, bien plus intense que celui qui serait généré par des circuits magnétiques primaires 23a, 23b constitués de simples aimants, de même dimension que ceux employés ici.

L'intensité de cet effort est employée dans la présente invention pour guider la connexion de l'élément mâle 2 à l'élément femelle 1 et pour venir plaquer fermement l'un contre l'autre l'élément mâle 2 à l'élément femelle 1 en complément de la retenue mécanique formée par le mécanisme de verrouillage à baïonnette. On forme de la sorte un dispositif de connexion particulièrement fiable. Ainsi, la force d'attraction magnétique des deux éléments 1, 2 l'un vers l'autre provoque naturellement la pénétration des ergots 18 dans les fentes 8, le glissement des ergots 18 sur les rampes 9 pour venir placer ces ergots 18 dans l'épaulement 10.

Afin de permettre la déconnexion du dispositif à l'aide d'un effort d'extraction axial réduit, et moindre que celui exercé par la force magnétique d'attraction, on peut munir les éléments mâle 2 et femelle 1 d'au moins une came de guidage tendant à éloigner l'un de l'autre les deux éléments mâle et femelle 1, 2 lorsque l'on déplace ces éléments en rotation l'un par rapport à l'autre de la position de verrouillage dans la position de déverrouillage.

Ainsi, et comme cela est représenté sur les figures 1, 2 et 3, le bord périphérique 12 de l'orifice 5 peut être muni de deux dents 13 diamétralement opposées ayant chacune deux pans inclinés qui servent de surface d'appui. La base 19 tronconique de l'élément mâle peut comporter deux rainures 20 à bords inclinés 21, 22 dans lesquelles peuvent s'engager respectivement les dents 13 à pans inclinés de l'élément femelle 1 quand l'élément mâle 2 est inséré dans l'élément femelle 1.

L'écartement provoqué par la rotation des deux éléments l'un par rapport à l'autre a pour effet de réduire l'attraction magnétique axiale et donc de faciliter la déconnexion des deux éléments mâle et femelle. En d'autres termes, on comprend que lors du passage d'une position de verrouillage à une position de déverrouillage, la rupture de la liaison magnétique est facilitée par la coopération mécanique entre les bords inclinés 21, 22 des rainures 20 du plot 16 de l'élément mâle 2 et les pans inclinés des dents 13 de l'élément femelle 1, formant les cames de guidage.

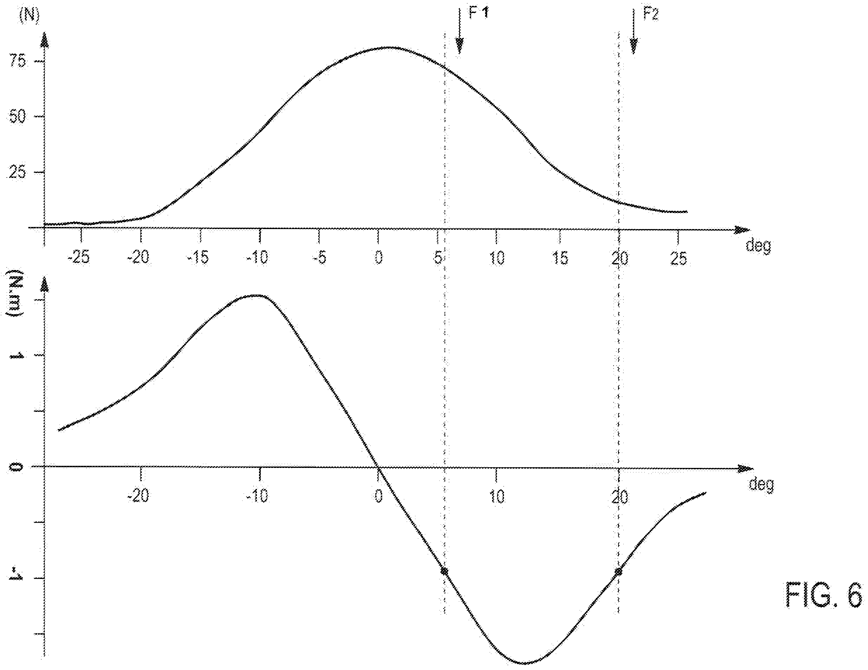

D'une manière générale, le sens et l'intensité de la force et du couple magnétique qui sont générés par le circuit magnétique multipolaire 26 dépendent du décalage angulaire existant entre les deux circuits magnétiques primaires 23a, 23b. Ainsi, la figure 6 représente respectivement la composante suivant l'axe A d'insertion de la force magnétique, et le couple magnétique généré par le circuit magnétique multipolaire 26 en fonction du décalage angulaire. Par convention, on définit le décalage angulaire nul ou de référence le décalage pour lequel le circuit magnétique multipolaire 26 produit une force d'attraction maximale entre les deux circuits magnétiques primaires 23a, 23b et un couple magnétique nul. Les circuits magnétiques primaires 23a, 23b sont respectivement solidarisés aux éléments mâles 2 et femelle 1 pour qu'un décalage angulaire nul conduise à placer les ergots 18 approximativement en vis-à-vis des ouvertures 8.

On vérifie sur la figure 6 qu'autour de ce décalage angulaire nul, le circuit magnétique multipolaire 26 produit une force d'attraction de forte intensité tendant à venir plaquer l'élément mâle 2 contre l'élément femelle 1. Le couple magnétique tend quant à lui à ramener ce décalage angulaire vers un décalage angulaire nul d'équilibre, ce qui guide le déplacement des ergots 18 vers les fentes formant les ouvertures 8. Le circuit magnétique multipolaire 26 permet donc de guider naturellement, en aveugle, l'insertion de l'élément mâle 2 dans l'élément femelle 1, en orientant angulairement ces éléments l'un par rapport à l'autre pour permettre de placer en position de verrouillage sans qu'un utilisateur n'ait à exercer un effort ou un couple particulier sur les éléments 1, 2. On note que selon la configuration du circuit magnétique multipolaire 26, celui-ci présente plusieurs décalage angulaire répondant à la définition de décalage angulaire de référence énoncé cidessus. Il suffit dans ce cas de choisir comme valeur de décalage angulaire de référence, celui mettant approximativement les ergots 18 en vis-à-vis des évidements 8. Ce choix peut être matérialisé par la présence d'un mécanisme détrompeur mécanique tel que décrit précédemment.

Selon l'invention, dans la position de verrouillage illustrée sur la figure 4a et matérialisé par la flèche F1 sur la figure 6, les circuits magnétiques primaires 23a, 23b présentent un décalage angulaire « a » non nul entre eux, de quelques degrés, par exemple compris entre 4° et 6°, de sorte à exercer un couple magnétique résiduel conduisant à maintenir les ergots 18 contre les butées 11. On produit ainsi un effet ressort de rappel, permettant de maintenir les ergots 18 contre les butées 11. On sécurise à l'aide de ce couple de maintien le positionnement de verrouillage des deux éléments 1, 2.

Comme on l'a vu précédemment, pour déverrouiller le dispositif de connexion, on applique un couple de déverrouillage sur l'un ou l'autre des éléments 1, 2 pour les placer dans une position de déverrouillage dans laquelle les ergots 18 sont en butée avec les parois droites des fentes 8. La position de déverrouillage conduit à imposer un décalage angulaire de déverrouillage b, représenté sur la figure 4b, entre les deux circuits magnétiques primaires 23a, 23b. Cette position est matérialisée par la flèche F2 sur la figure 6. Avantageusement, ce décalage angulaire est choisi de telle sorte que la force magnétique de traction axiale présente une intensité relativement faible, comme cela est bien visible sur la figure 6, permettant d'extraire l'élément mâle 2 de l'élément femelle 1 avec un effort d'extraction relativement faible de la part de l'utilisateur.

D'une manière plus générale, on cherchera à ce qu'en position de déverrouillage, la force magnétique de traction engendrée par le circuit magnétique multipolaire 26 soit inférieure (et de préférence nettement inférieure) à la force magnétique de traction engendrée par ce circuit magnétique 26 en position de verrouillage. Pour obtenir cette configuration particulière, on pourra jouer sur le dimensionnement mécanique des éléments mâles et femelle 1, 2, et notamment sur le débattement angulaire des ergots 18 dans les évidements 8 entre les deux positions de verrouillage et de déverrouillage, et sur la configuration des circuits magnétiques primaires 23a, 23b de manière à ajuster le profil des courbes caractéristiques, telles que celles représentées sur la figure 6.

On pourra utiliser cette caractéristique ingénieuse seule, ou en combinaison avec la came de guidage, pour chercher à réduire l'effort d'extraction à appliquer pour obtenir la déconnexion du dispositif.

On notera sur la figure 6 qu'en position de déverrouillage un couple de rappel s'applique toujours, si bien que si l'utilisateur relâche ses efforts d'extraction, les deux éléments mâles et femelles 1, 2 peuvent se rassembler à nouveau.

Dans la configuration du circuit magnétique multipolaire 26 de la figure 5a, on dispose de quatre pôles et donc de deux positions angulaires de référence. Dans ce cas, et comme on l'a déjà annoncé précédemment, le détrompeur mécanique peut permettre de n'autoriser l'assemblage pour une seul de cette position de référence.

De manière préférée toutefois, on choisira de former un circuit magnétique multipolaire 26 ne comprenant que deux pôles, et ne présentant donc qu'un unique décalage angulaire de référence. Cela peut être obtenu en disposant uniquement deux aimants 25 sur les culasses annulaires 24a, 24b de chaque circuit magnétique primaire 23a, 23b. Une telle configuration ne permet toutefois pas de facilement obtenir les profils de force et de couple qui ont été reportés sur la figure 6, bien qu'une telle configuration reste possible dans certaines applications.

Préférentiellement donc, on utilisera quatre aimants permanents sur chaque culasse 24a, 24b, dans une disposition similaire à celle décrite en relation avec la description de la figure 5a. Toutefois, dans ce mode préféré et pour chaque circuit primaire 23a, 23b, deux couples d'aimants adjacents sont orientés pour présenter des polarités opposées, et deux autres couples d'aimants adjacents sont orienté pour présenter des polarités identiques, afin de former une configuration « NNSS ». On forme de la sorte deux boucles 26a, 26b de circulation magnétique de polarité opposée.

Comme cela est bien visible sur la figure 5b, il n'est pas nécessaire dans ce cas que les culasses présentent une forme fermée, telle qu'en forme d'anneau, pour permettre de refermer les flux et former les deux pôles. Deux sections disjointes d'un matériau ferroélectrique sont suffisantes pour former une culasse fonctionnelle. Dans cette configuration, le comportement magnétique du circuit magnétique multipolaire 26 est très similaire à celui représenté par les courbes caractéristiques de la figure 6.

On pourra choisir de combiner une telle configuration du circuit magnétique multipolaire 26 en dipôle avec un dispositif mécanique détrompeur, même si celui-ci n'est plus nécessaire.

Bien entendu l'invention n'est pas limitée aux modes de mise en œuvre décrits et on peut y apporter des variantes de réalisation sans sortir du cadre de l'invention tel que défini par les revendications.

Bien que l'on ait indiqué dans les exemples illustrés, quatre aimants par jeu d'aimants de chaque circuit primaire 23a, 23b, l'invention peut s'appliquer à un nombre d'aimants différent, préférentiellement un nombre pair d'aimants. De plus, certains des aimants 25 peuvent être remplacés par de simples pièces ferromagnétiques, dans la mesure où ces remplacements permettent toujours de refermer les flux dans le circuit magnétique multipolaire. Il n'est donc pas nécessaire que tous les aimants 25 soient constitués d'aimants permanents.

On notera que le système de détrompeur mécanique pourrait être agencé de sorte que le pion 14 soit placé sur la collerette du corps 15 de l'élément mâle 2 et la lumière 23 sur la collerette du corps 4 de l'élément femelle 1.

On notera également que lorsque le dispositif de connexion est une prise électrique, les contacts électriques à lamelle 6, 17 sont répartis intérieurement pour la prise électrique femelle 1 et extérieurement pour la prise électrique mâle 2 et s'étendent suivant la direction axiale d'insertion. La bonne mise en contact des contacts électriques 6 et 17 à lamelle est garantie par le choix d'utiliser des lamelles à zone ressort.

## Revendications

1. Dispositif de connexion comprenant un élément mâle (2) et un élément femelle (1) adaptés pour s'insérer axialement l'un dans l'autre et se verrouiller l'un à l'autre par l'intermédiaire d'un mécanisme à baïonnette (8, 18), l'élément mâle (2) et l'élément femelle (1) portant chacun un circuit magnétique primaire (23a, 23b) comprenant une culasse ferromagnétique (24a, 24b) et une pluralité d'aimants (25) disposées dans un plan transversal à l'axe d'insertion, les dispositifs magnétiques primaires (23a, 23b) étant susceptibles de se coupler magnétiquement l'un à l'autre lorsque l'élément mâle (2) et l'élément femelle (1) sont à proximité en vis-à-vis l'un de l'autre pour former un circuit magnétique multipolaire (26) dans lequel les aimants (25) sont disposés entre les deux culasses (24a, 24b) de manière à générer un flux magnétique se refermant sur les deux culasses (24a, 24b) et provoquer une force magnétique d'attraction axiale, le dispositif étant **caractérisé en ce que**, en position de verrouillage, le circuit magnétique primaire (23a) de l'élément femelle (1) et le circuit magnétique primaire (23b) de l'élément mâle (2) présentent un décalage angulaire de verrouillage dans un plan transversal à l'axe d'insertion pour produire un couple magnétique de maintien présentant un effet ressort.

2. Dispositif selon la revendication précédente dans lequel le décalage angulaire de verrouillage est compris entre 4° et 6°.

3. Dispositif selon l'une des revendications précédentes dans lequel l'application d'un couple de déverrouillage sur l'un ou l'autre des éléments (1, 2) pour placer les deux éléments (1, 2) en position de déverrouillage impose un décalage angulaire de déverrouillage entre le circuit magnétique primaire (23a) de l'élément femelle (1) et le circuit magnétique primaire (23b) de l'élément mâle (2) pour lequel la force magnétique d'attraction axiale présente une intensité moindre que celle générée lorsque les deux éléments (1, 2) sont disposés en position de verrouillage.

4. Dispositif selon la revendication précédente dans lequel le décalage angulaire de déverrouillage est compris entre 10° et 45°.

5. Dispositif selon l'une des revendications précédentes dans lequel le circuit magnétique multipolaire (26) présente quatre pôles.

6. Dispositif selon l'une des revendications 1 à 4 dans lequel le circuit magnétique multipolaire (26) présente deux pôles.

7. Dispositif de connexion selon l'une des revendications précédentes, dans lequel l'élément femelle (1) comporte une cage annulaire avec un orifice (5) dans laquelle s'insère un plot de connexion (16) de l'élément mâle (1).

8. Dispositif de connexion selon l'une des revendications précédentes dans lequel l'élément femelle (1) et l'élément male (2) sont pourvus d'au moins une came de guidage tendant à écarter l'élément mâle (2) de l'élément femelle (1) en cas de déverrouillage.

9. Dispositif de connexion selon la revendication précédente, dans lequel la came de guidage est formée d'une dent (13) à pans inclinés disposée sur l'élément femelle (1) et d'une rainure (20) à bords inclinés (21, 22) disposée sur l'élément mâle (2), la dent (13) étant configurée pour s'engager dans la rainure (20) lorsque l'élément femelle (1) et l'élément mâle (2) sont insérés l'un dans l'autre.

10. Dispositif de connexion selon la revendication 9 dans lequel la dent (13) est configurée pour prendre appui sur les bords inclinés (21, 22) de la rainure (20) de sorte à éloigner l'élément mâle (2) de l'élément femelle (1) en cas de déverrouillage.

11. Dispositif de connexion selon l'une des revendications précédentes, comprenant un système mécanique détrompeur pour positionner angulairement l'élément mâle (2) dans l'élément femelle (1).

12. Dispositif de connexion selon l'une des revendications précédentes dans lequel l'élément femelle (1) et l'élément mâle (2) sont des prises électriques.

13. Dispositif de connexion selon la revendication précédente dans lequel les prises électriques sont des prises électriques pour un attelage, et notamment un attelage de remorque.

## Patentansprüche

1. Verbindungsvorrichtung mit einem Steckerelement (2) und einem Buchsenelement (1), die axial ineinander einschiebbar und durch einen Bajonettmechanismus (8, 18) miteinander verriegelbar sind, wobei das Steckerelement (2) und das Buchsenelement (1) jeweils einen primären Magnetkreis (23a, 23b) tragen, der ein ferromagnetisches Joch (24a, 24b) und eine Vielzahl von Magneten (25) umfasst, die in einer Ebene quer zu der Einschubachse angeordnet sind, wobei die primären Magnetvorrichtungen (23a, 23b) geeignet sind, magnetisch miteinander zu koppeln, wenn das Steckerelement (2) und das Buchsenelement (1) in der Nähe und einander gegenüber sind, um einen mehrpoligen Magnetkreis (26) auszubilden, in dem die Magnete (25) zwischen den zwei Jochen (24a, 24b) angeordnet sind, so dass sie einen magnetischen Fluss erzeugen, der sich an den zwei Jochen (24a, 24b) schließt und eine magnetische axiale Anziehungskraft bewirken, wobei die Vorrichtung **dadurch gekennzeichnet ist, dass** in Verriegelungsposition der primäre Magnetkreis (23a) des Buchsenelements (1) und der primäre Magnetkreis (23b) des Steckerelements (2) einen Verriegelungswinkelversatz in einer Ebene quer zu der Einschubachse aufweisen, um ein magnetisches Haltedrehmoment zu erzeugen, das eine Federwirkung aufweist.

2. Vorrichtung nach dem vorhergehenden Anspruch, wobei der Verriegelungswinkelversatz von 4° bis 6° beträgt.

3. Vorrichtung nach einem der vorhergehenden Ansprüche, wobei die Anwendung eines Entriegelungsdrehmoments auf das eine oder das andere der Elemente (1, 2) zum Platzieren der zwei Elemente (1, 2) in die Entriegelungsposition einen Entriegelungswinkelversatz zwischen dem primären Magnetkreis (23a) des Buchsenelements (1) und dem primären Magnetkreis (23b) des Steckerelements (2) erzwingt, für das die magnetische axiale Anziehungskraft eine geringere Intensität als diejenige aufweist, die erzeugt wird, wenn die zwei Elemente (1, 2) in Verriegelungsposition angeordnet sind.

4. Vorrichtung nach dem vorhergehenden Anspruch, wobei der Entriegelungswinkelversatz von 10° bis 45° beträgt.

5. Vorrichtung nach einem der vorhergehenden Ansprüche, wobei der mehrpolige Magnetkreis (26) vier Pole aufweist.

6. Vorrichtung nach einem der Ansprüche 1 bis 4, wobei der mehrpolige Magnetkreis (26) zwei Pole aufweist.

7. Verbindungsvorrichtung nach einem der vorhergehenden Ansprüche, wobei das Buchsenelement (1) einen ringförmigen Halter mit einer Öffnung (5) aufweist, in die ein Verbindungskontakt (16) des Steckerelements (1) eingeschoben ist.

8. Verbindungsvorrichtung nach einem der vorhergehenden Ansprüche, wobei das Buchsenelement (1) und das Steckerelement (2) mit wenigstens einem Führungsnocken versehen sind, der bei einer Entriegelung das Steckerelement (2) von dem Buchsenelement (1) entfernt.

9. Verbindungsvorrichtung nach dem vorhergehenden Anspruch, wobei der Führungsnocken aus einem Zahn (13) mit geneigten Seiten, der an dem Buchsenelement (1) angeordnet ist, und einer Nut (20) mit geneigten Kanten (21, 22), die an dem Steckerelement (2) angeordnet ist, ausgebildet ist, wobei der Zahn (13) konfiguriert ist, um in die Nut (20) einzugreifen, wenn das Buchsenelement (1) und das Steckerelement (2) ineinandergeschoben sind.

10. Verbindungsvorrichtung nach Anspruch 9, wobei der Zahn (13) konfiguriert ist, um an den geneigten Kanten (21, 22) der Nut (20) anzuliegen, um bei einer Entriegelung das Steckerelement (2) von dem Buchsenelement (1) zu entfernen.

11. Verbindungsvorrichtung nach einem der vorhergehenden Ansprüche, die ein mechanisches Unverwechselbarkeitssystem zum winkligen Positionieren des Steckerelements (2) in dem Buchsenelement (1) umfasst.

12. Verbindungsvorrichtung nach einem der vorhergehenden Ansprüche, wobei das Buchsenelement (1) und das Steckerelement (2) elektrische Steckverbindungen sind.

13. Verbindungsvorrichtung nach dem vorhergehenden Anspruch, wobei die elektrischen Steckverbindungen elektrische Steckverbindungen für eine Kupplung und insbesondere eine Anhängerkupplung sind.

## Claims

1. Connection device, comprising a male element (2) and a female element (1) suitable for being inserted axially one into the other and for locking to one another by means of a bayonet mechanism (8, 18), the male element (2) and the female element (1) each supporting a primary magnetic circuit (23a, 23b) comprising a ferromagnetic yoke (24a, 24b) and a plurality of magnets (25) arranged in a plane transverse to the insertion axis, the primary magnetic devices (23a, 23b) being capable of magnetically coupling to each other when the male element (2) and the female element (1) face and are close to each other so as to form a multipolar magnetic circuit (26) in which the magnets (25) are arranged between the two yokes (24a, 24b) in such a way as to generate a magnetic flux closing at the two yokes (24a, 24b) and bring about an axial magnetic attraction force, the device being **characterized in that**, in the locking position, the primary magnetic circuit (23a) of the female element (1) and the primary magnetic circuit (23b) of the male element (2) have an angular locking offset in a plane transverse to the insertion axis for producing a magnetic holding torque having a spring effect.

2. Device according to the preceding claim, wherein the angular locking offset is between 4° and 6°.

3. Device according to either of the preceding claims, wherein applying an unlocking torque to one or the other of the elements (1, 2) in order to put the two elements (1, 2) in the unlocking position brings about an angular unlocking offset between the primary magnetic circuit (23a) of the female element (1) and the primary magnetic circuit (23b) of the male element (2) for which the axial magnetic attraction force has an intensity less than that generated when the two elements (1, 2) are arranged in the locking position.

4. Device according to the preceding claim, wherein the angular unlocking offset is between 10° and 45°.

5. Device according to any of the preceding claims, wherein the multipolar magnetic circuit (26) has four poles.

6. Device according to any of claims 1 to 4, wherein the multipolar magnetic circuit (26) has two poles.

7. Connection device according to any of the preceding claims, wherein the female element (1) comprises an annular housing that has an opening (5) into which a connection pad (16) of the male element (1) is inserted.

8. Connection device according to any of the preceding claims, wherein the female element (1) and the male element (2) are provided with at least one guide cam designed to move the male element (2) away from the female element (1) in the event of unlocking.

9. Connection device according to the preceding claim, wherein the guide cam is formed by a tooth (13) which has inclined sides and is arranged on the female element (1) and by a groove (20) which has inclined edges (21, 22) and is arranged on the male element (2), the tooth (13) being configured to engage in the groove (20) when the female element (1) and the male element (2) are inserted one into the other.

10. Connection device according to claim 9, wherein the tooth (13) is configured to bear on the inclined edges (21, 22) of the groove (20) in such a way as to move the male element (2) away from the female element (1) in the event of unlocking.

11. Connection device according to any of the preceding claims, comprising a mechanical keying system for angularly positioning the male element (2) in the female element (1).

12. Connection device according to any of the preceding claims, wherein the female element (1) and the male element (2) are electrical plugs.

13. Connection device according to the preceding claim, wherein the electrical plugs are electrical plugs for a coupling, and in particular a trailer coupling.
